Europäisches Patentamt

European Patent Office

Office européen des brevets

(11) Publication number: **0 162 582**
**B1**

(12) **EUROPEAN PATENT SPECIFICATION**

(45) Date of publication of patent specification: **19.09.90**

(21) Application number: **85302759.7**

(22) Date of filing: **19.04.85**

(51) Int. Cl.⁵: **G 06 K 7/10**

(54) **Bar code reader system.**

(30) Priority: **19.04.84 JP 79978/84**

(43) Date of publication of application:
**27.11.85 Bulletin 85/48**

(45) Publication of the grant of the patent:
**19.09.90 Bulletin 90/38**

(84) Designated Contracting States:
**DE FR GB NL**

(56) References cited:
**EP-A-0 061 000**
**DE-A-3 006 579**
**US-A-4 167 664**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Kageyama, Hiroshi c/o Patent Division**
**Toshiba Corporation Principal Office**
**1-1, Shibaura 1-chome Minato-ku Tokyo (JP)**
Inventor: **Koyama, Katsuhide c/o Patent**
**Division**
**Toshiba Corporation Principal Office**
**1-1, Shibaura 1-chome Minato-ku Tokyo (JP)**
Inventor: **Fujiwara, Shigemi c/o Patent Division**
**Toshiba Corporation Principal Office**
**1-1, Shibaura 1-chome Minato-ku Tokyo (JP)**

(74) Representative: **Shindler, Nigel et al**
**BATCHELLOR, KIRK & CO. 2 Pear Tree Court**
**Farringdon Road**
**London EC1R 0DS (GB)**

Courier Press, Leamington Spa, England.

## Description

The present invention relates, to optical scanning apparatus and more particularly to an optical system for reading bar codes printed on surfaces which may be at variable positions relative to the apparatus, such as sheets of radiographic recording material stacked in a container.

The use of optical bar-codes for identifying a wide variety of goods is well established, and they are particularly useful in conjunction with automatic data processing systems. This has given rise to a strong demand for reliable systems which will rapidly and accurately read the information provided by the codes and transfer that information to a computer, a data storage system, a read-out display, a control device or the like. Extremely fast and accurate reading of these codes is particularly necessary if the advantages of computer control are to be realised.

Numerous reading devices as well as a variety of mechanical systems have been developed for detecting bar-codes and for providing corresponding electrical signals. A typical prior art system comprises a light source for directing a light beam to illuminate and scan the bar-codes, and a deflector positioned in the light path to receive the reflected light and deflect it through a field lens towards an optical sensor consisting of a single continuous row of photodiodes which responds to the light pattern impinging thereon to produce corresponding outputs.

Various problems are encountered in prior art systems. For example, many prior devices are incapable of reading bar-codes that are printed on background material that provides a poor contrast with the printing ink, where the printing ink has been smudged, or where dirt gets on the code label and provides false reading. Therefore it is necessary to carry out multiple scans of a bar-code in order that the coded information be accurately read out with a high degree of resolution and reliability.

A particular problem is encountered where it is desired to detect codes printed on stacking sheets such as radiographic recording sheets in a magazine. The reading of bar-code labels on stacked sheets presents additional difficulties where the sheet labelled with the bar-code is positioned in an unfixed vertical position of the magazines so that the label may move out of focus. Thus it is preferable to maintain the distance between the reader and the code label within the predetermined range by moving the reader suitably in a vertical direction. In readers in which the light beam is focused on the label, there is a limited range of distance between the reader and the label which will provide accurate read-out.

One form of known bar-code reader is shown in DE 3006579 which includes means for manually adjusting the position of the optical reading head by means of a movable carriage (7) in which the head (8) is mounted. Such an arrangement does not however automatically compensate for the different vertical positions of labels loaded in magazines.

It is, therefore, a general object of the present invention to mitigate the aforementioned disadvantages.

More particularly, the present invention seeks to provide an improved optical bar-code reader system which is particularly suitable for reading bar-codes on the surface of sheets stacked in magazine.

The invention also seeks to provide an improved system which is simple in structure and inexpensive to manufacture.

Accordingly the present invention provides bar-code reading apparatus adapted for reading bar-code labels on a surface, comprising an optical head including means for directing a beam of light onto the label to be read, and light sensing means for detecting light reflected from the label, characterised in that the said optical head is movably mounted on the apparatus relative to said surface and includes a spacer device for maintaining the optical head at a constant focusing distance from the surface, and said spacer device is mounted on the head and has a distal end which is adapted to abut against the surface, biasing means being connected to the head so as to urge the spacer device towards the surface.

Preferably the head is pivotally mounted on the apparatus.

The invention makes it possible to maintain constant the distance between the reader and the bar-coded label on a sheet stacked in a magazine, without regard to the vertical position of the sheet in the magazine, so that the bar-coded label is read with accuracy.

Further, in a preferred arrangement of the present invention, it is possible to scan the bar-code several times during rotation of the apparatus relative to the sheet thereby reducing the probability of scanning contamination by dust or minor anomalies in the bar-coded labels.

One embodiment of the invention will now be described by way of example with reference to the accompanying drawings in which:

Figure 1 is a longitudinal sectional view of a bar-code reader system according to the invention; and

Figures 2 and 3 are diagrams for explaining the principles of the new bar-code reader system.

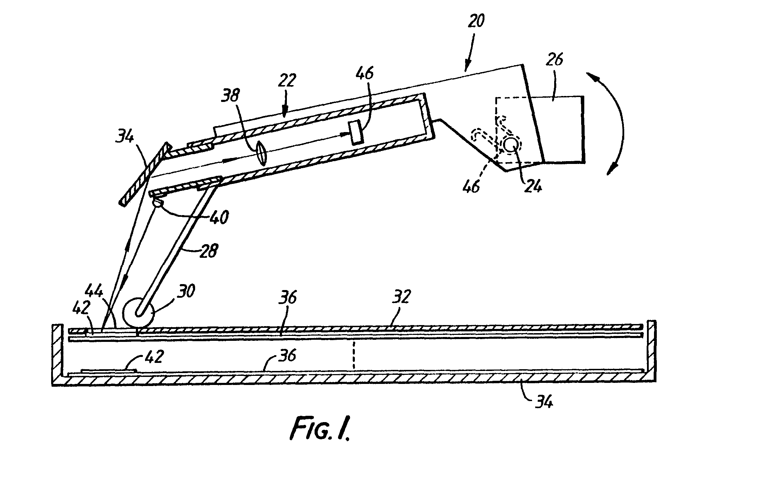

Referring first to Figure 1, the bar-code reader system 20 generally comprises a bar-code reader head 22 for reading a bar-code having parallel bars indicative of information, which is pivotably supported for rotation about a pivot axis 24 on a mounting plate 26, and an arm 28 one end of which is rigidly connected to the bar-code reader head 22, and has a roller 30 pivotally contacting with a press plate 32 which is actuated by a drive mechanism (not shown) for pushing the sheets into the stacking area of the magazine 34.

The bar-code reader head 22 is shown in more detail in Figure 1 and comprises a light sensor 46 and field lens 38, a light source 40 and a deflector 34 which is positioned so as to face radiographic recording sheet 36 stacked in the magazine 34, so that the light beam is directed downwards toward the bar-coded label 42. The label 42 is mounted on a sheet 36 held beneath the press plate 32, which has a window 44 through which the label is read. The light sensor 46 consists of a single continuous row of photodiodes which respond to the light pattern impinging thereon to produce corresponding outputs. A spacer arm 28 is also connected to the free end of the reader head 22. The reader head 22 is pivotally mounted by its other end on a spring pivot 24 so that the spacer arm is urged into engagement with the press plate 42.

In a radiographic system (not shown) the bar-code reader apparatus 20 is positioned above the magazine 34 which receives the radiographic recording sheets, such as x-ray films or stimulable phosphor sheets, after the respective sheets thereof have been exposed. The magazine 34 is a light-tight enclosure which is mounted on tracks (not shown) to facilitate its removal to a darkroom of the radiographic system for loading and unloading. The exposed sheet of film is transported into the collection magazine 34 from the exposure station of the radiographic system by a transport system (not shown). The sheet 36 has a bar-coded label 42 affixed, or a bar-code 42 printed thereon. The bar-codes 42 are used for identifying the patient under investigation, which are disposed on the edge portion of the sheet 36 so as not to overlay the diagnostic information of radiographs. A plurality of sheets are fed into the magazine 34 to be stored in a stack.

The bar-code reader apparatus 20 is arranged for reading the bar-coded labels 42 adhered to the surface of the uppermost sheet 36 of a stack of sheets 36 in the magazine 34.

The uppermost sheet 36 of the stack is held down against the bottom or floor plate of the magazine 34 by the pressure plate 32 which is driven by a drive mechanism (not shown). Further, the pressure plate 32 has an aperture 44 which is suitably positioned to allow the light beam directed from the bar-code reader system 20 to impinge on the bar-coded label 42 on the uppermost sheet 36 in the magazine 34.

The spring-biased bar-code reader head 22 is thus always urged against the pressure plate (36) to contact closely with it, since it rotates around the pivot shaft 24 on the mounting plate 26 in the direction indicated by the arrow in accordance with the vertical movement of the pressure plate 32, depending on the number of the sheets 36 stacked in the magazine 34. Thus it is possible to maintain constant the distance between the bar-code reader unit 22 and the uppermost sheet 36.

The distance as above described is given by the arm 28 having a suitable length to provide the accurate reading of bar codes with the light beam focused on the bar-coded label 42.

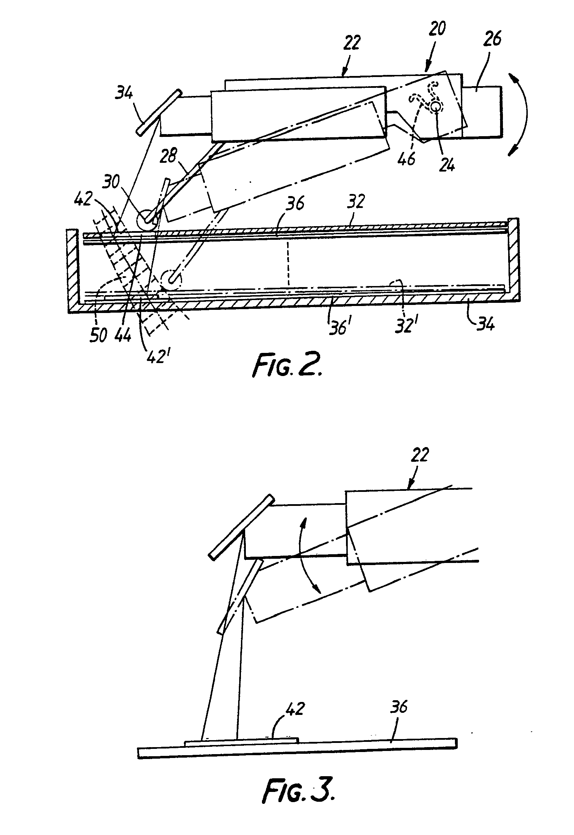

Referring now to Figures 2 and 3, it can be seen that the bar-code reader head 22 rotates about the axis of pivot 24 with descending movement of the pressure plate 32 in a clockwise direction as shown in Figure 2, the bar-code reader head 22 is always maintained in the appropriate range 50 relative to the uppermost sheet 36 in the magazine 34 to be able to read the bar code in the label 42 disposed on the sheet 36 by means of the illumination from the light beam from the light source 40. Accordingly, the reflected light from the bar-coded label 42 is deflected toward the line scan sensor 46 where a single line scan image of the bar-codes is received through the field lens 38.

Furthermore while the bar-code reader head is being rotated about the axis of pivot 26, multiple scans of the bar-codes on a single sheet 36 can be made, provided the distance between the top of the bar-code reader unit 22 and the bar-coded label 42 falls within the effective range for reading it with high accuracy as shown in Figure 3. This enables accurate and reliable information to be obtained so that the effects of minor anomalies on the bar codes are eliminated.

Although the invention has been described in its preferred form with a certain degree of particularity, it is understood that the present disclosure has been made only by way of example. Numerous changes in the details and construction of the combination and arrangement of parts will be apparent within the scope of the appended claims.

For example, the aperture provided in the pressure plate may be replaced by a transparent window, or the pressure plate may be made entirely of transparent material.

## Claims

1. Bar-code reading aparatus adapted for reading bar-code labels (42) on a surface (36) comprising an optical head (22) including means for directing a beam of light onto the label to be read, and light sensing means for detecting light reflected from the label, characterised in that the said optical head (22) is movably mounted on the apparatus relative to said surface and includes a spacer device (28) for maintaining the optical head at a constant focussing distance from the surface, and said spacer device (28) is mounted on the head (22) and has a distal end which is adapted to abut against the surface (36), biassing means being connected to the head so as to urge the spacer device towards the surface (36)

2. Apparatus according to claim 2 in which the head (22) is pivotally mounted on the apparatus.

3. Apparatus according to any preceding claim in which the spacer device (28) is provided with a wheel or roller (30) on its said distal end to contact the label or surface, to facilitate smooth movement of the head.

## Patentansprüche

1. Strichkode-Lesevorrichtung zum Lesen von Strichkode-Etiketten (42) auf einer Oberfläche (36), mit einem optischen Lesekopf (22), der Einrichtungen zum Leiten eines Lichtstrahls auf das zu lesende Etikett und Lichterkennungsmittel zum Erkennen von Licht aufweist, das von dem Etikett reflektiert wird, dadurch gekennzeichnet, daß der optische Lesekopf (22) an der Vorrichtung bezüglich der Oberfläche beweglich angebracht ist und eine Abstandseinrichtung (28) aufweist, um ihn in einem konstanten Fokussierabstand von der Oberfläche zu halten, und daß die Abstandseinrichtung (28) an dem Lesekopf (22) angebracht ist und ein vorderes Ende besitzt, das zum Anliegen an der Oberfläche (36) gestaltet ist, wobei an dem Kopf Vorspannmittel angebracht sind, die die Abstandseinrichtung gegen die Oberfläche (36) drücken.

2. Vorrichtung nach Anspruch 2, wobei der Lesekopf (22) an der Vorrichtung schwenkbar angebracht ist.

3. Vorrichtung nach einem der vorhergehenden Ansprüche, wobei die Abstandseinrichtung (28) mit einem Rad oder einer Walze (30) an dem Vorderende versehen ist, um das Etikett oder die Oberfläche zu berühren und um eine glatte Bewegung des Kopfes zu ermöglichen.

**Revendications**

1. Appareil de lecture de codes à barres conçu pour lire des marques de codes à barres (42) sur une surface (36) comprenant une tête optique (22) qui comporte des moyens pour diriger un faisceau de lumière sur la marque à lire, et des moyens de détection de lumière pour détecter la lumière qui est réfléchie par la marque, caractérisé en ce que la tête optique (22) est montée de façon mobile sur l'appareil par rapport à la surface précitée, et comprend un dispositif d'espacement (28) destiné à maintenir la tête optique à une distance de focalisation constante par rapport à la surface, et ce dispositif d'espacement (28) est monté sur la tête (22) et il comporte une extrémité distale qui est conçue pour porter contre la surface (36), tandis que des moyens de sollicitation sont accouplés à la tête de façon à solliciter le dispositif d'espacement vers la surface précitée (36).

2. Appareil selon la revendication 2, dans lequel la tête (22) est montée de façon pivotante sur l'appareil.

3. Appareil selon l'une quelconque des revendications précédentes, dans lequel le dispositif d'espacement (28) est équipé d'un rouleau ou d'un galet (30) à son extrèmité distale, pour venir en contact avec la marque ou la surface, afin de faciliter un mouvement doux de la tête.

FIG.I.

1

FIG. 2.

FIG. 3.